# EUROPÄISCHE PATENTANMELDUNG

(11) **EP 1 967 349 A1**
(43) Veröffentlichungstag der Anmeldung: **10.09.2008**
(21) Anmeldenummer: 08101098.5
(22) Anmeldetag: 30.01.2008
(51) Int. Cl.: B29C 45/68, B29C 45/82

(54) **Schließeinheit**

(30) Priorität: 08.03.2007 DE 102007011442
(71) Anmelder: Robert Bosch GmbH, 70184 Stuttgart (DE)
(72) Erfinder: Dantlgraber, Jörg, 97816 Lohr am Main (DE)
(74) Vertreter: Thürer, Andreas

(57) **Zusammenfassung**

Offenbart ist eine Schließeinheit einer Spritzgießnaschine, bei der die beim Abbremsen einer beweglichen Werkzeugaufspannplatte abzubauende kinetische Energie zum Antreiben einer Hydromaschine genutzt wird, über die ein Hochdruckspeicher aufladbar ist.

## Beschreibung

Die Erfindung betrifft eine Schließeinheit gemäß dem Oberbegriff des Patentanspruches 1.

In jüngster Zeit geht man dazu über, Spritzgießmaschinen mit elektrischen und hydraulischen Antrieben zu versehen, wobei über den elektrischen Antrieb Stellbewegungen mit hoher Geschwindigkeit bei vergleichsweise geringen Kräften ausgeführt werden, während der hydraulische Antrieb besonders vorteilhaft ist, wenn hohe Axialkräfte bei vergleichsweise geringfügigen Stellbewegungen aufgebracht werden müssen. Derartige Anforderungen treten beispielsweise bei einer Schließeinheit zum Schließen des Werkzeugs einer Kunststoffspritzgießmaschine auf, wobei eine bewegliche Aufspannplatte zum Schließen eines Werkzeugs zunächst über den elektrischen Antrieb schnell bewegt wird und dann zum vollständigen Zufahren und Zuhalten des Werkzeugs mit der erforderlichen hohen Schließkraft nur ein kurzer Resthub mittels der Hydraulik durchfahren wird.

Eine derartige Schließeinheit für eine Spritzgießmaschine ist beispielsweise aus der DE 41 11 594 A1 bekannt. Bei dieser Lösung ist eine bewegliche Aufspannplatte über einen Hydrozylinder an einer elektrisch betätigten Hubspindelanordnung abgestützt, um schnell schließen und öffnen zu können. Die hohe Schließkraft wird durch Druckbeaufschlagung des mit der Schließplatte verfahrbaren Hydrozylinders hydraulisch aufgebracht.

Aus der DE 103 54 955 A1 ist des Weiteren eine Antriebseinheit mit einem hydraulischen Kraftübersetzer bekannt, dessen Kolbeneinheit über eine elektrisch betätigte Hubspindelanordnung betätigt wird. Die Kolbeneinheit begrenzt gemeinsam mit einem Zwischenteil und einem Kolben einen Druckraum. Bei dieser Lösung ist das Zwischenteil mit dem Gestell der Spritzgießmaschine verriegelbar, so dass die Axialkraft des hydraulischen Kraftübersetzers von dem Maschinengestell aufgenommen wird.

Da die Öffnungs- und Schließbewegung des Werkzeugs zur Minimierung der Zykluszeiten sehr schnell erfolgen soll, muss die sehr große Masse der Aufspannplatte und des darauf gespannten Werkzeugteils stark beschleunigt und dann wieder abgebremst werden. Die dabei abzubauende kinetische Energie wird bei herkömmlichen Lösungen häufig in einem gekühlten Bremswiderstand abgebaut und in ungenutzte Wärmeenergie ungewandelt, die bei ungünstigen Bedingungen zusätzlich noch zu einem Aufheizen des Maschinensystems führt.

Demgegenüber liegt der Erfindung die Aufgabe zugrunde, eine im Hinblick auf den Energieeintrag optimierte Schließeinheit zu schaffen.

Diese Aufgabe wird durch eine Schließeinheit mit den Merkmalen des Patentanspruches 1 gelöst.

Erfindungsgemäß wird die beim Abbremsen beweglicher Bauteile der Schließeinheit frei werdende kinetische Energie genutzt, um eine Hydromaschine anzutreiben, über die ein Hochdruckspeicher zur Versorgung des Antriebs der Schließeinheit aufgeladen oder ein anderer Verbraucher mit Druckmittel versorgt wird.

Bei einem derartigen Maschinenkonzept lässt sich die bisher beim Abbremsen in Wärme umgewandelte Energie zum Großteil nutzen, so dass zum Antrieb der Verbraucher oder der Schließeinheit weniger Energie von außen zugeführt werden muss. In dem Fall, in dem der elektrische Antrieb der Schließeinheit hydraulisch unterstützt ist, kann die beim Abbremsen frei werdende kinetische Energie über den Hochdruckspeicher zum Beschleunigen der Schließeinheit verwendet werden, so dass über den eigentlichen elektrischen Antrieb jeweils nur die Verlustleistung des Antriebsmotors aufgebracht werden muss.

Bei einem bevorzugten Ausführungsbeispiel ist die Hydromaschine mit zwei Wirkrichtungen ausgeführt, so dass die beim schnellen Öffnen und Schließen der Schließeinheit frei werdende kinetische Energie genutzt werden kann. Bei einer derartigen Hydromaschine erfolgt die Druckmittelverbindung mit dem Hochdruckspeicher und ggf. einem Niederdruckspeicher über eine Ladeventilanordnung, so dass der Hochdruckspeicher beim Abbremsen der beweglichen Massen aufgeladen wird.

Diese Ladeventilanordnung kann beispielsweise mit einem in einer Druckleitung angeordneten und in Richtung zum Hochdruckspeicher öffnenden oder aufsteuerbaren Druckventil und mit einem in einer Saugleitung angeordneten, in Richtung zu einem Sauganschluss der Hydromaschine öffnenden Saugventil ausgeführt sein. Bei einer Hydromaschine mit zwei Wirkrichtungen ist dann entsprechend jeder dieser Wirkrichtungen ein Saug- und ein Druckventil zugeordnet, so dass praktisch eine hydraulische Gleichrichtung des Förderstroms erfolgt.

Diese Saug- und Druckventile können aktiv betätigbar (Schaltventil) sein oder passiv betätigbar als Rückschlagventil ausgebildet werden.

Die Hydromaschine kann als rotierende Hydromaschine oder als lineare Hydromaschine ausgeführt sein, wobei diese beispielsweise beim Abbremsen der Schließeinheit als Pumpe zum Aufladen des Hydrospeichers und beim Beschleunigen oder beim Fahren mit konstanter Geschwindigkeit als Hydromotor zum Antreiben eines Verbrauchers wirkt.

Bei einem Ausführungsbeispiel ist die Hydromaschine mit einem Antriebsmotor des elektrischen Antriebs gekoppelt, so dass dieser beim Beschleunigen oder beim Fahren mit konstanter Geschwindigkeit hydraulisch unterstützt wird.

Die lineare Hydromaschine ist vorzugsweise als Plungermaschine ausgeführt, deren Kolben oder Zylinder in Wirkverbindung mit der beweglichen Werkzeugaufspannplatte verstellbar ist, so dass über die Ladeventilanordnung Druckmittel aus dem sich verkleinernden Druckraum zum Hochdruckspeicher und aus einem Niederdruckspeicher in den sich vergrößernden Druckraum förderbar ist.

Bei einem bevorzugten Ausführungsbeispiel ist ein Zylinder der Plungermaschine an der beweglichen Werkzeugaufspannplatte und ein Plungerkolben an der feststehenden Werkzeugaufspannplatte abgestützt.

Eine derartige Schließeinheit lässt sich besonders kompakt ausbilden, wenn der Plungerkolben eine Spindel des elektrischen Antriebs umgreift und in dem an der beweglichen Werkzeugaufspannplatte befestigten Zylinder geführt ist, der seinerseits von der Spindel durchsetzt ist.

Bei einem einfach aufgebauten Ausführungsbeispiel wirkt die Hydromaschine beim Abbremsen als Pumpe zum Aufladen des Hydrospeichers. Beim Fahren mit konstanter Geschwindigkeit oder beim Beschleunigen der beweglichen Bauelemente der Schließeinheit wird diese Pumpe auf drucklosen Umlauf geschaltet.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 ein Prinzipschaubild einer elektrohydraulisch betätigten Schließeinheit einer Spritzgießmaschine mit einem beim Abbremsen der Schließeinheit über einen Hydromotor aufladbaren Hochdruckspeicher;
Figur 2 ein Ausführungsbeispiel einer Schließeinheit gemäß Figur 1, bei der der Hochdruckspeicher sowohl beim Abbremsen der Öffnungsbewegung als auch beim Abbremsen der Schließbewegung geladen wird;
Figur 3 ein Ausführungsbeispiel einer Schließeinheit, bei der der Hochdruckspeicher mittels einer linearen Hydromaschine und passiv betätigten Saug-/Druckventilen aufgeladen wird und
Figur 4 ein Ausführungsbeispiel gemäß Figur 3, wobei anstelle der passiven Ventile aktive Ventile zur Druckmittelverbindung des Hochdruckspeichers und des Niederdruckspeichers mit der linearen Hydromaschine verwendet sind.

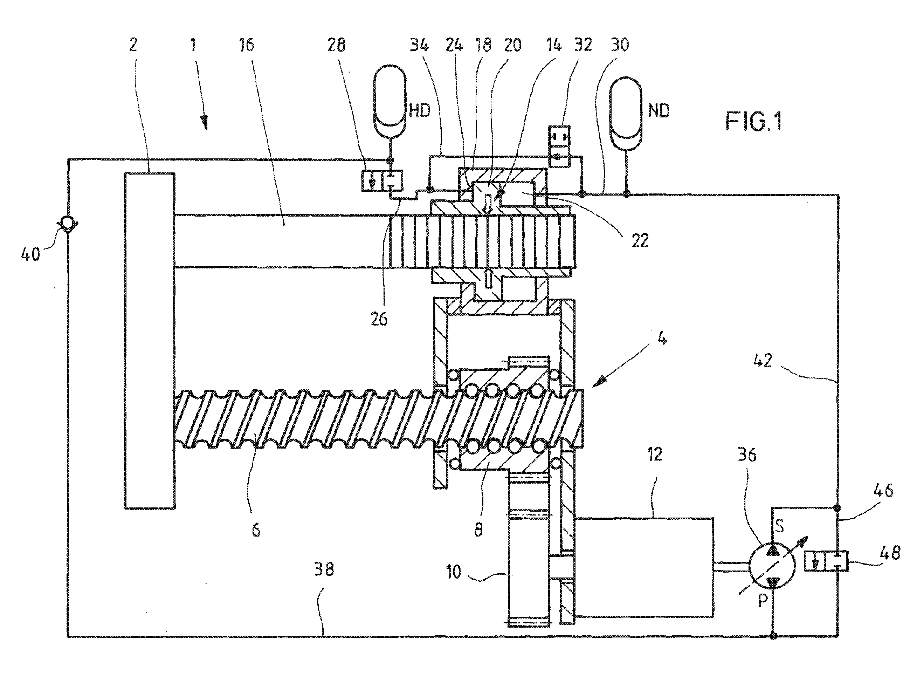

In Figur 1 ist ein Schaltschema einer elektrisch und hydraulisch betätigten Schließeinheit 1 einer Spritzgießmaschine dargestellt. Da der Aufbau derartiger Schließeinheiten aus dem eingangs beispielsweise genannten Stand der Technik bekannt ist, werden im Folgenden nur die zum Verständnis der Erfindung erforderlichen Bauelemente beschrieben.

Eine Schließeinheit einer Spritzgießmaschine besteht im Wesentlichen aus einer nicht dargestellten, festen, am Maschinengestell abgestützten Werkzeugaufspannplatte und einer relativ dazu verschiebbaren beweglichen Werkzeugaufspannplatte 2. Diese tragen jeweils einen Teil eines Werkzeugs, das zum Spritzgießen eines Bauteils geschlossen und mit einer sehr hohen Schließkraft beaufschlagt wird, so dass über ein Einspritzaggregat aufgeschmolzenes Thermoplast in eine durch das Werkzeug begrenzte Kavität eingespritzt werden kann. Zum Entformen des im Werkzeug erstarrten Formteils wird das Werkzeug durch Verfahren der beweglichen Werkzeugaufspannplatte 2 geöffnet und das Formteil mittels Auswerfern ausgeworfen. Anschließend wird das Werkzeug wieder durch Verfahren der Werkzeugaufspannplatte 2 geschlossen - der nächste Zyklus beginnt. Gerade bei großflächigen Formteilen muss die Spritzgießmaschine sehr steif ausgelegt werden, so dass entsprechend die bewegliche Werkzeugaufspannplatte eine große Masse aufweist, um beim Spritzgießen die erforderlichen Schließkräfte übertragen zu können. Das Werkzeuggewicht ist ebenfalls erheblich, so dass beim Öffnen und Schließen des Werkzeugs große Massen beschleunigt und abgebremst werden müssen. Bei Schließeinheiten 1 mit elektrischem Antrieb wird in der Regel das schnelle Öffnen und Schließen des Werkzeugs über den elektrischen Antrieb durchgeführt, während dann die Schließkraft hydraulisch aufgebracht wird.

Beim dargestellten Ausführungsbeispiel wird die Werkzeugaufspannplafte 2 durch einen Kugelgewindetrieb 4 mit einer drehfest mit der Werkzeugaufspannplatte . 2 verbundenen Spindel 6 und einer am Maschinengestell drehbar gelagerten Spindelmutter 8 betätigt. Diese wird mittels eines Zahnriementriebs 10 und eines Elektromotors 12 angetrieben, die ebenfalls am Maschinengestell (-rahmen) gelagert sind. Je nach Drehrichtung des Motors 12 wird die Spindelmutter 8 in die eine oder die andere Richtung gedreht und die Spindel 6 und damit die bewegliche Aufspannplatte 2 in Achsrichtung (siehe Pfeil in Figur 1) verschoben, um das Werkzeug zu schließen oder zu öffnen. Bei dem in Figur 1 dargestellten Ausführungsbeispiel kann die bewegliche Werkzeugaufspannplatte 2 bei vollständig oder nahezu geschlossenem Werkzeug zur Entlastung des Gewindespindeltriebs 4 über eine mechanische Verriegelung 14 verriegelt werden. Dazu ist bei dem dargestellten Ausführungsbeispiel an der beweglichen Aufspannplatte 2 ein sich im Parallelabstand zur Spindel 6 erstreckender Holm 16 angeordnet, der mit der Verriegelungseinheit 14 kraft- oder formschlüssig in Verriegelungseingriff bringbar ist. Das vollständige Schließen des Werkzeugs und das Aufbringen der Schließkraft erfolgt dann hydraulisch über einen Schließzylinder 18, der einen den Holm 16 umgreifenden Kolben 20 hat, durch den der Innenraum des Schließzylinders 18 in einen Druckraum 22 und einen in der Darstellung gemäß Figur 1 minimalen Druckraum 24 unterteilt ist. Der letztgenannte Druckraum 24 ist über eine Druckleitung 26 und ein Hochdruckschaltventil 28 mit einem Hochdruckspeicher HD verbunden. Der andere Druckraum 22 steht über eine Niederdruckleitung 30 in Druckmittelverbindung mit einem Niederdruckspeicher ND. Die Niederdruckleitung 30 ist über eine Bypassleitung 34 und ein darin angeordnetes Niederdruckschaltventil 32 mit der Druckleitung 26 verbindbar. Die Ventile 28, 32 sind jeweils 2-Wege-Schaltventile, die über die Maschinensteuerung ansteuerbar sind. Die den Druckraum 22 begrenzende Wirkfläche des Kolbens 20 ist etwas größer als die den anderen Druckraum 24 begrenzende Wirkfläche, so dass, wenn bei offenem Niederdruckschaltventil 32 und geschlossenem Hochdruckschaltventil 28 in beiden Druckräumen 22, 24 Niederdruck anliegt, der Kolben 20 aufgrund der größeren Wirkfläche im Druckraum 22 nach links in die dargestellte Position bewegt wird. Zum Aufbringen des Hochdrucks und der damit einhergehenden Verschiebung des Kolbens 20 nach rechts wird das Niederdruckschaltventil 32 in seine Schließstellung gebracht und das Hochdruckschaltventil 28 geöffnet, so dass der mit dem Holm 16 verriegelte Kolben 20 mit großer Kraft nach rechts verschoben wird, wobei der Motor 12 noch so angesteuert wird, dass die Spindelmutter 8 mitdreht und diese Schließbewegung zulässt. Hinsichtlich weiterer Einzelheiten des Aufbaus dieser elektrohydraulischen Schließeinheit sei der Einfachheit halber auf die am gleichen Tag hinterlegte Anmeldung der Anmelderin mit dem Titel "Schließeinheit" verwiesen.

Wie eingangs beschrieben, erfolgt die schnelle Öffnungs- und Schließbewegung der Werkzeugaufspannplatte 2 über den Kugelgewindetrieb 4, wobei dann entsprechend beim Schließen des Werkzeugs und zum Endpunkt der Öffnungsbewegung hin erhebliche Massen abgebremst werden müssen. Dieses Abbremsen erfolgt in der Regel über den elektrischen Antrieb, wobei ein meist gekühlter Bremswiderstand vorgesehen ist. Erfindungsgemäß erfolgt das Abbremsen beim Öffnen und/oder Schließen der Werkzeugaufspannplatte hydraulisch. Dazu ist der Elektromotor 12 mechanisch mit einer Hydromaschine 36 gekoppelt, die bei dem in Figur 1 mit durchgezogenen Linien dargestellten Ausführungsbeispiel als Pumpe mit zwei Förderrichtungen ausgeführt ist. Ein Anschluss P der Hydromaschine 36 ist über eine Ladeleitung 38 und ein darin angeordnetes, in Richtung zum Hochdruckspeicher HD öffnendes Druckventil 40 mit dem Hochdruckspeicher HD verbunden. Der andere Anschluss S der Hydromaschine 36 ist über eine Saugleitung 42 mit der Niederdruckleitung 30 verbunden.

Die beiden Anschlüsse S, P der Hydromaschine 36 lassen sich über eine Umlaufleitung 46 und ein darin angeordnetes Umlaufschaltventil 48 miteinander verbinden, indem letzteres aus seiner dargestellten Sperrposition in eine Öffnungsstellung gebracht wird.

Soll nun beispielsweise die beim Abbremsen der schnellen Schließbewegung des Werkzeuges freiwerdende Energie genutzt werden (Rekuperation), wird das Umlaufschaltventil 48 in seine gezeigte Sperrstellung gebracht, so dass der aufgrund der großen Masse der abzubremsenden Bauteile weiter drehende Elektromotor 12 die auf einer gemeinsamen Welle sitzende Hydromaschine 36 antreibt, so dass Druckmittel aus dem Niederdruckspeicher ND und über den Anschluss P und die Ladeleitung 38 sowie das Rückschlagventil 40 zum Hochdruckspeicher gefördert wird und diesen auflädt. Die gespeicherte hydraulische Energie kann dann beispielsweise zum Schließen des Werkzeugs über den Schließzylinder 18 verwendet werden. Beim Beschleunigen oder gleichförmigen Bewegen der Werkzeugaufspannplatte 2 oder beim Auffahren der Werkzeugaufspannplatte 2 wird das Umlaufschaltventil 48 in seine Öffnungsstellung gebracht, so dass die als Konstantpumpe ausgeführte Hydromaschine 36 auf Umlauf geschaltet ist.

Anstelle der dargestellten Konstantpumpe könnte, wie in Figur 1 gestrichelt angedeutet, auch eine verstellbare Hydromaschine verwendet und damit die Bremskraft gezielt beeinflußt werden. Nachteilig bei der in Figur 1 dargestellten Lösung ist, dass lediglich die in einer Verfahrrichtung der Aufspannplatte 2 abzubauende kinetische Energie genutzt wird.

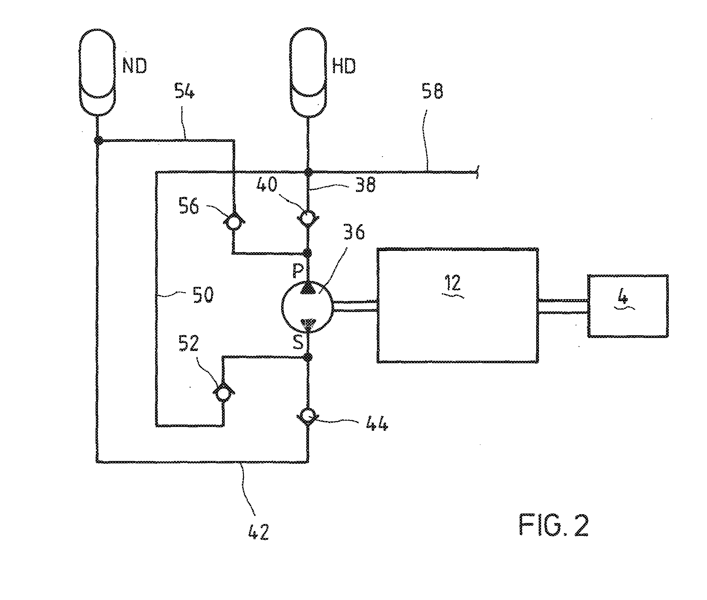

Figur 2 zeigt den Grundaufbau einer Schaltung, mit der die Bremsenergie in beiden Verfahrrichtungen der Aufspannplatte 2 nutzbar ist, um andere Verbraucher der Spritzgießmaschine, beispielsweise Auswerfer oder hydraulische Elemente der Einspritzeinheit mit Druckmittel zu versorgen.

Bei dem in Figur 2 dargestellten Ausführungsbeispiel ist für jede Bewegungsrichtung der Werkzeugaufspannplatte 2 ein Druckmittelströmungspfad zum Aufladen des Hochdruckspeichers HD vorgesehen. Der Einfachheit halber werden bei der folgenden Beschreibung für entsprechende Bauelemente die gleichen Bezugszeichen wie in Figur 1 verwendet. Dementsprechend ist bei dem Konzept gemäß Figur 2 ebenfalls eine Hydromaschine 36 mit dem Motor 12 gekoppelt, so dass - wie beim vorbeschriebenen Ausführungsbeispiel - der Motor die Hydromaschine 36 antreiben kann. Der Anschluss P der Hydromaschine 36 ist wiederum über die Ladeleitung 38 und das Druckventil 40 mit dem Hochdruckspeicher HD verbunden, während der andere Anschluss S über die Saugleitung 42 und ein darin angeordnetes Saugventil 44 mit dem Niederdruckspeicher ND verbunden ist. Um die in der anderen Bewegungsrichtung freiwerdende Bremsenergie auszunutzen, zweigt im Bereich zwischen dem Anschluss S und dem Saugventil 44 eine weitere Ladeleitung 50 mit einem weiteren Druckventil 52 ab und verbindet diesen Bereich mit dem Hochdruckspeicher HD. Entsprechend zweigt im Bereich zwischen dem Anschluss P und dem Druckventil 40 eine weitere Saugleitung 54 mit einem Saugventil 56 ab, die zum Niederdruckspeicher ND führt. Bei dieser Variante ist des Weiteren der Hochdruckspeicher HD über eine Arbeitsleitung 58 mit weiteren Verbrauchern der Spritzgießmaschine verbunden, so dass diese aus dem Hochdruckspeicher HD mit Druckmittel versorgbar sind.

Es sei nun angenommen, dass die Drehrichtung des Motors 12 und damit der Hydromaschine 36, die beim dargestellten Ausführungsbeispiel als Konstantpumpe mit zwei Förderrichtungen ausgeführt ist, derart ist, dass beim Abbremsen der Schließbewegung Druckmittel aus dem Niederdruckspeicher ND über die Saugleitung 42, das Saugventil 44 und den Anschluss P der Hydromaschine 36 sowie das sich öffnende Druckventil 40 und die Ladeleitung 38 zum Hochdruckspeicher HD und damit über die Arbeitsleitung 58 zu den anderen Verbrauchern förderbar ist. Diese Funktion entspricht derjenigen des Ausführungsbeispiels aus Figur 1.

Beim Abbremsen der schnellen Öffnungsbewegung dreht der Motor 12 und damit die Hydromaschine 36 in der Gegenrichtung, so dass der Anschluss S als Hochdruckanschluss und der Anschluss P als Sauganschluss wirkt. Entsprechend wird Druckmittel aus dem Niederdruckspeicher ND über die weitere Saugleitung 54, das weitere Saugventil 56, die Hydromaschine 36, die weitere Ladeleitung 50 und das sich öffnende weitere Druckventil 52. in Richtung zum Hochdruckspeicher HD gefördert, so dass dieser auch beim Abbremsen der Öffnungsbewegung aufgeladen wird. Prinzipiell kann auch bei der Schaltung gemäß Figur 2 wiederum ein Umlaufventil vorgesehen werden, um die Hydromaschine 36 beim Beschleunigen oder beim Verfahren der Werkzeugaufspannplatte mit konstanter Geschwindigkeit auf drucklosen Umlauf zu schalten.

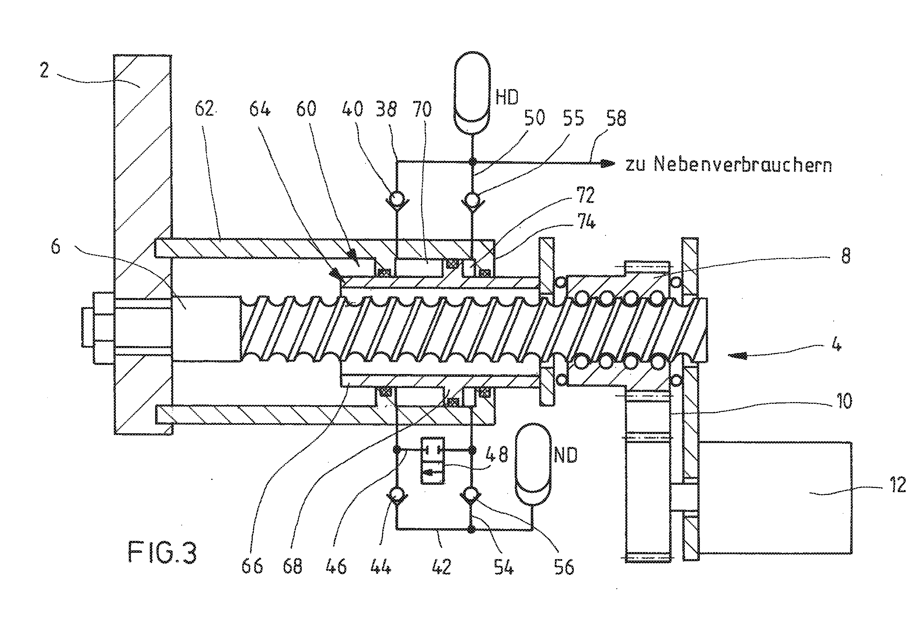

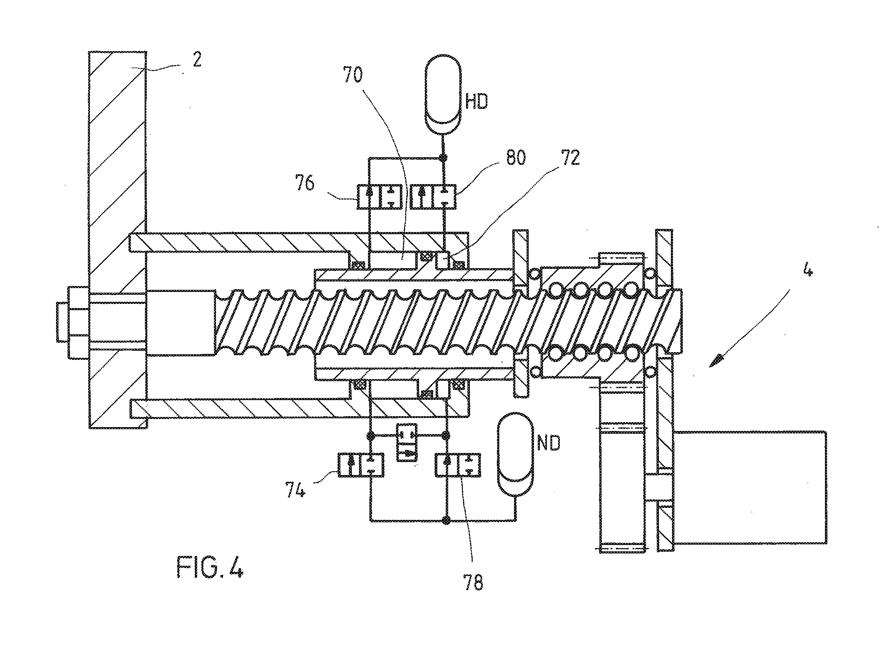

Bei dem vorbeschriebenen Ausführungsbeispiel ist eine rotierende Hydromaschine 36 verwendet. Selbstverständlich können auch andere Hydromaschinentypen, wie beispielsweise eine linear verstellbare Hydromaschine verwendet werden. Derartige Ausführungsbeispiele werden im Folgenden anhand der beiden Figuren 3 und 4 erläutert.

Bei dem in Figur 3 dargestellten Ausführungsbeispiel wird eine Art Plungerpumpe als lineare Hydromaschine 60 verwendet, um beim Abbremsen der Öffnungs- und Schließbewegung der beweglichen Aufspannplatte 2 den Hochdruckspeicher HD aufzuladen. Ähnlich wie bei dem in Figur 1 dargestellten Ausführungsbeispiel erfolgt der Antrieb der beweglichen Aufspannplatte 2 über einen Kugelgewindetrieb 4 mit einer an der Aufspannplatte 2 befestigten Spindel 6 und einer diese in Achsrichtung verschiebende, am Maschinengestell drehbar gelagerten Spindelmutter 8. Letztere wird über einen Zahnriementrieb 10 von einem Motor 12 angetrieben.

Die lineare Hydromaschine 60 hat ein mit der Werkzeugaufspannplatte 2 verbundenes Zylindergehäuse 62, das einen Abschnitt der Spindel 6 umgreift, wobei diese stirnseitig aus dem Zylindergehäuse 62 austritt. Im Zylindergehäuse 62 ist ein Plungerkolben 64 axial verschiebbar geführt. Dieser ist als Hohlkolben ausgeführt und wird von der Spindel 6 durchsetzt. An einem Kolbenhemd 66 des Plungerkolbens 64 ist ein radial vorspringender Kolbenbund 68 ausgebildet, der mit zwei Stirnwandungsabschnitten des Zylindergehäuses 62 einen Raum 70 und einen Raum 72 begrenzt. Der sich in Figur 3 rechts an den Kolbenbund 68 anschließende Teil des Kolbenhemds 66 durchsetzt eine Stirnwandung 74 des Zylindergehäuses 62 und ist am Maschinengestell abgestützt. Bei einer Verstellung der beweglichen Aufspannplatte 2 werden somit die beiden Räume 70, 72 des Zylindergehäuses 62 gegenläufig vergrößert bzw. verkleinert. Ähnlich wie bei dem Ausführungsbeispiel gemäß Figur 2 wird der Hochdruckspeicher HD in beiden Bewegungsrichtungen der Aufspannplatte 2 aufgeladen. Die gespeicherte Energie kann dann über die Arbeitsleitung 58 zur Druckmittelversorgung weiterer Verbraucher der Spritzgießmaschine verwendet werden. Beim dargestellten Ausführungsbeispiel ist der linke (Ansicht nach Figur 3) Druckraum 70 über die Saugleitung 42 und das Saugventil 44 mit dem Niederdruckspeicher ND sowie über die Ladeleitung 38 und das Druckventil 40 mit dem Hochdruckspeicher HD verbunden. Der rechte Druckraum 72 steht über die weitere Saugleitung 54 und das weitere Saugventil 56 in Druckmittelverbindung mit dem Niederdruckspeicher ND und über die weitere Ladeleitung 50 sowie das weitere Druckventil 52 in Druckmittelverbindung mit dem Hochdruckspeicher HD. Die Saugleitung 42 und die weitere Saugleitung 54 sind über die Umlaufleitung 46 und das Umlaufschaltventil 48 miteinander verbindbar, um die Hydromaschine 60 beim Beschleunigen oder gleichförmigen Bewegen der Aufspannplatte 2 auf Umlauf zu schalten, wobei dann beide Räume 70, 72 direkt miteinander verbunden sind.

Beim Verfahren der Aufspannplatte 2 nach rechts in Figur 3 (Schließen des Werkzeugs) wird bei geschlossenem Ventil 48 Druckmittel aus dem sich verkleinernden Druckraum 70 über das Druckventil 40 zum Hochdruckspeicher HD oder zu den Nebenverbrauchern gefördert. Der Niederdruckspeicher ND ist dann über das weitere Saugventil 56 und die weitere Saugleitung 54 mit dem sich vergrößernden Druckraum 72 verbunden, so dass Druckmittel in diesen einströmt. Beim Aufbringen der Schließkraft und der sich anschließenden Öffnungsbewegung wird die Hydromaschine 60 durch Öffnen des Umlaufschaltventils 48 auf Umlauf geschaltet. Zum Abbremsen der Öffnungsbewegung wird dieses Umlaufschaltventil 48 wiederum geschlossen, so dass Druckmittel aus dem sich nunmehr verkleinernden Druckraum 72 über das weitere Druckventil 52 und die weitere Ladeleitung 50 zum Hochdruckspeicher HD und über das Saugventil 44 und die Saugleitung 42 vom Niederdruckspeicher ND in den Druckraum 70 gefördert wird. Bei einem derartigen Ausführungsbeispiel mit passiven Saug-/Druckventilen 40, 44, 52, 56 kann der Hydrospeicher HD nicht ohne weiteres zum Beschleunigen der Werkzeugaufspannplatte 2 eingesetzt werden. Dieser Nachteil kann beseitigt werden, indem anstelle der passiven Ventile 40, 44, 52, 56 jeweils aktiv schaltbare Ventile eingesetzt werden. Eine derartige Schaltung ist in Figur 4 dargestellt.

Bei diesem Ausführungsbeispiel sind lediglich die als Rückschlagventile ausgeführten Saugventile 44, 56 und Druckventile 40, 52 durch ein Saugschaltventil 74, ein weiteres Saugschaltventil 78 bzw. ein Druckschaltventil 76 und ein weiteres Druckschaltventil 80 ersetzt. Im Übrigen entspricht der Aufbau demjenigen aus Figur 3, so dass weitere Erläuterungen entbehrlich sind. Beim Abbremsen der Schließbewegung der Werkzeugaufspannplatte 2 (Bewegung nach rechts in Figur 4) werden die Ventile in ihre in Figur 4 dargestellte Position umgeschaltet, so dass der Druckraum 70 über das Druckschaltventil 76 mit dem Hochdruckspeicher und der sich vergrößernde Druckraum 72 über das weitere Saugschaltventil 78 mit dem Niederdruckspeicher verbunden ist. Zum Nutzen der beim Abbremsen der Öffnungsbewegung frei werdenden kinetischen Energie werden die beiden Ventile 76, 78 in ihre Sperrstellung umgeschaltet und die beiden Ventile 80, 74 entsprechend geöffnet, so dass Druckmittel aus dem Druckraum 72 zum Hochdruckspeicher und vom Niederdruckspeicher in den sich vergrößernden Druckraum 70 gefördert wird. Zum Unterstützen der Beschleunigung der Aufspannplatte 2 kann jeweils der Hochdruckspeicher HD aufgeschaltet werden, so dass der Kugelgewindetrieb 4 durch die dann als Hydromotor wirkende lineare Hydromaschine 60 unterstützt wird. D.h. beispielsweise zum Beschleunigen der Werkzeugaufspannplatte 2 in Schließrichtung werden das weitere Druckschaltventil 80 und das Saugschaltventil 74 geöffnet, so dass die Werkzeugaufspannplatte 2 mit einer der Wirkfläche des Kolbenbunds 68 und dem Druck im Hochdruckspeicher entsprechenden Kraft in Schließrichtung zusätzlich beschleunigt wird.

Ein derartiges willkürliches Aufschalten der Beschleunigung ist mit passiven Schaltelementen gemäß den Darstellungen in Figur 2 und 3 nicht möglich.

Selbstverständlich kann eine den Ausführungsbeispielen gemäß den Figuren 3 und 4 entsprechende Schaltung auch bei der Variante gemäß Figur 1 verwendet werden, so dass die drehende Hydromaschine 36 dann ebenfalls zur Unterstützung der Beschleunigung verwendet werden kann.

Offenbart ist eine Schließeinheit einer Spritzgießmaschine, bei der die beim Abbremsen einer beweglichen Werkzeugaufspannplatte abzubauende kinetische Energie zum Antreiben einer Hydromaschine genutzt wird, über die ein Hochdruckspeicher aufladbar ist.

## Patentansprüche

1. Schließeinheit einer Spritzgießmaschine oder dergleichen mit einer beweglichen Werkzeugaufspannplatte (2), die mittels eines elektrischen Antriebs (4) mit Bezug zu einer feststehenden Werkzeugaufspannplatte bewegbar ist, **gekennzeichnet durch** eine Hydromaschine (36, 60), die beim Abbremsen der beweglichen Werkzeugaufspannplatte antreibbar ist, um einen Hochdruckspeicher aufzuladen oder weitere Verbraucher mit Druckmittel zu versorgen.

2. Schließeinheit nach Patentanspruch 1, wobei die Hydromaschine (36, 60) mit zwei Wirkrichtungen ausgeführt ist und über eine Ladeventilanordnung (40, 44, 52, 56; 74, 76, 78, 80) in beiden Förderrichtungen mit dem Hochdruckspeicher (HD) oder einem Niederdruckspeicher (ND) verbindbar ist.

3. Schließeinheit nach Patentanspruch 2, wobei die Ladeventilanordnung ein in Richtung zum Hochdruckspeicher öffnendes, in einer Ladeleitung (38, 50) angeordnetes Druckventil (40, 52, 76, 80) und ein in einer Saugleitung (42, 54) angeordnetes, in Richtung zu einem Niederdruckanschluss der Hydromaschine (36, 60) öffnendes Saugventil (44, 56, 74, 78) hat.

4. Schließeinheit nach Patentanspruch 3, wobei jeder Wirkrichtung ein Saug- und ein Druckventil (40, 44, 52, 56, 74, 76, 78, 80) zugeordnet sind.

5. Schließeinheit nach Patentanspruch 3 oder 4, wobei die Saug- und Druckventile (40, 44, 52, 56; 74, 76, 78, 80) passiv oder aktiv betätigbar sind.

6. Schließeinheit nach einem der Patentansprüche 1 bis 5, wobei die Hydromaschine eine rotierende Hydromaschine (36) ist, die beim Abbremsen als Pumpe zum Aufladen des Hochdruckspeichers (HD) und beim Beschleunigen oder bei konstanter Geschwindigkeit der beweglichen Werkzeugaufspannplatte (2) als Hydromotor zum Antreiben eines Verbrauchers wirkt.

7. Schließeinheit nach Patentanspruch 6, wobei die Hydromaschine mit einem Motor (12) des elektrischen Antriebs (4) gekoppelt ist.

8. Schließeinheit nach einem der Patentansprüche 1 bis 5, wobei die Hydromaschine eine lineare Hydromaschine (60) ist, die beim Abbremsen als Pumpe zum Aufladen des Hydrospeichers und beim Beschleunigen oder bei konstanter Geschwindigkeit der beweglichen Werkzeugaufspannplatte (2) als Hydromotor zum Antrieb eines Verbrauchers wirkt.

9. Schließeinheit nach Patentanspruch 8, wobei die lineare Hydromaschine eine Plungermaschine ist, deren Plungerkolben (64) oder Zylindergehäuse (62) in Wirkverbindung mit der beweglichen Werkzeugaufspannplatte (2) verstellbar ist, so dass über die Ladeventilanordnung (40, 44, 52, 56; 74, 76, 78, 80) Druckmittel beim Abbremsen aus dem sich verkleinernden Druckraum (70, 72) zum Hochdruckspeicher (HD) und aus einem Niederdruckspeicher (ND) in den sich vergrößernden Druckraum (72, 70) förderbar ist.

10. Hydromaschine nach Patentanspruch 9, wobei das Zylindergehäuse (62) an der beweglichen Werkzeugaufspannplatte (2) und der Plungerkolben (64) an einem Maschinengestell abgestützt sind.

11. Schließeinheit nach Patentanspruch 9 oder 10, wobei der Plungerkolben (64) eine Spindel (6) des elektrischen Antriebs (4) umgreift und in dem an der beweglichen Werkzeugaufspannplatte (2) befestigten Zylindergehäuse (62) geführt ist, das seinerseits von der Spindel (6) durchsetzt ist.

12. Schließeinheit nach einem der vorhergehenden Patentansprüche, mit einem Umlaufventil (48) zum Verbinden der beiden Anschlüsse der Hydromaschine (36, 60).
